# EUROPÄISCHE PATENTSCHRIFT

(11) **EP 1 558 003 B1**
(45) Veröffentlichungstag und Bekanntmachung des Hinweises auf die Patenterteilung: **23.04.2008**
(21) Anmeldenummer: 04001488.8
(22) Anmeldetag: 23.01.2004
(51) Int. Cl.: H04L 29/12, H04L 29/14

(54) **Adressierung von redundanten Teilnehmern in einem Kommunikationsnetzwerk**
Addressing of redundant elements in a communication network
Adressage des éléments redundants dans un réseau de communication.

(43) Veröffentlichungstag der Anmeldung: 27.07.2005
(73) Patentinhaber: SIEMENS AKTIENGESELLSCHAFT, 80333 München (DE)
(72) Erfinder: Barthel, Herbert, 91074 Herzogenaurach (DE); Feld, Joachim, 90451 Nürnberg (DE); Steindl, Günter, 92284 Poppenricht (DE); Weber, Karl, Dr., 90518 Altdorf (DE)

(56) Entgegenhaltungen:
- US-A- 5 473 599
- LI T ET AL: "RCF 2281 - Cisco Hot Standby Router Protocolo (HSRP)" März 1998 (1998-03), , XP002196799 * Zusammenfassung * * Seite 3, Absätze 1,3 *
- KNIGHT S ET AL: "Virtual Router Redundancy Protocol" April 1998 (1998-04), , XP002135272 * Zusammenfassung * * Seite 3, Absatz 4 * * Seite 6, Absätze 4,5 * * Seite 8 *

## Beschreibung

Die Erfindung betrifft ein System sowie ein Verfahren zur Adressierung von mindestens zwei zueinander redundanten Teilnehmern in einem Kommunikationsnetzwerk, wobei den Teilnehmern eine im Kommunikationsnetzwerk eindeutige physikalische Adresse dauerhaft zugeordnet ist.

Aus der US 6 392 990 B1 ist ein Verfahren zur Behandlung von Fehlern bei Schnittstellenkomponenten eines Netzwerks bekannt. Das Verfahren ist zum Ablauf auf einem Rechner in einem Netzwerk mit einer Vielzahl von Rechnern vorgesehen, wobei die Rechner zueinander redundante mit redundanten Leitungen angeschlossene Schnittstelleneinheiten aufweisen. Das Verfahren stellt eine transparente Wiederherstellung nach Netzwerkfehlern sicher, indem es eine Adressliste der Rechner im Netzwerk bereitstellt. Der Rechner testet periodisch die Kommunikationsverbindungen zu einem oder mehreren der anderen Rechner, bis er von mindestens einem Rechner eine Antwort in Form von dessen Netzwerkadresse erhält. Der Rechner nutzt daraufhin die Netzwerkadresse des anderen Rechners, um die Kommunikationsverbindung zu diesem Rechner zu überwachen, bis gegebenenfalls der andere Rechner nicht mehr antwortet. Für den Fall, dass er keine Antwort erhält, weist der Rechner die Netzwerkadresse des anderen Rechners der redundanten Schnittstelleneinheit zu.

Aus der US 5,473,599 ist ein System und ein Verfahren bekannt, mithilfe dessen Datenpakete in einem Kommunikationsnetzwerk über eine virtuelle Adresse eines aktiven Routers aus einer Gruppe von Routern versendet werden können. Hierbei kümmert sich der Sender nicht um die eigentliche physikalische Adresse des Routers.

Aus Li et al. (1998) RCF 2281 - Cisci Hot Standby Router Protocol (HSRP) ist ebenfalls bekannt, dass mehrere Router einen einzigen virtuellen Router bilden und die Netzteilnehmer ihre Daten an den virtuellen Router senden.

Der Erfindung liegt die Aufgabe zugrunde, die Verfügbarkeit von Kommunikationsverbindungen innerhalb eines Kommunikationsnetzwerks zu erhöhen.

Diese Aufgabe wird durch ein System mit den im Anspruch 1 genannten Merkmalen gelöst.

Die Aufgabe wird auch durch ein Verfahren mit den im Anspruch 4 genannten Merkmalen gelöst.

Zur Erhöhung der Kommunikationsverfügbarkeit werden Kommunikationsbusse häufig hochverfügbar ausgelegt. Dies wird z. B. durch Aufbau eines Kommunikationsringes oder durch Verdopplung der Kommunikationsleitungen erreicht. Um nicht nur den Ausfall der Kommunikationsstrecke sondern auch den Ausfall einer Kommunikationseinheit zu beherrschen, wird in vielen Fällen auch die Kommunikationseinheit redundant realisiert, da diese beim hochverfügbaren Kommunikationsbus die nächste Schwachstelle ist. Funktionseinheiten, z. B. redundante Steuerungseinheiten oder Peripherieeinheiten mit redundanter Kommunikationseinheit, die an einen Kommunikationsbus (Linie oder Ring) oder an einen redundanten Kommunikationsbus angeschlossen sind müssen adressierbar sein. Hierbei gibt zwei gegensätzliche Anforderungen: Für alle Funktionen, für die die Redundanz verdeckt sein soll, sollte die Funktionseinheit nur eine Adresse erhalten. Zu solchen Funktionen zählt z. B. die Anbindung einkanalig angebundener Prozessperipherie. Diese Adresse sollte umschaltbar sein. Für alle Funktionen für die die Redundanz offengelegt sein soll, sollte die Funktionseinheit bzw. ihre Kommunikationseinheit so viele Adressen erhalten wie redundante Komponenten in der redundanten Einheit vorhanden sind. So wird eine anwendergerechte Diagnose möglich, da z. B. bei einem Fehler die jeweilige Adresse der betroffenen Komponente eindeutig angegeben werden kann. Die gleiche Anforderung gibt es bei der Wartung und für Auskunftsfunktionen. Auch hier interessiert nicht die Gemeinsamkeit der redundanten Komponenten sondern exakt die Zustandsdaten der einzelnen Komponente. Die redundante Kommunikationseinheit kann generell n-kanalig (n > 1) aufgebaut sein. Die vorliegende Erfindung erfüllt die beiden beschriebenen, scheinbar widersprüchlichen Anforderungen. Als Teilnehmer im Kommunikationsnetzwerk bzw. als Kommunikationsteilnehmer werden hier Kommunikationseinheiten und gegebenenfalls deren Teileinheiten bezeichnet.

Gemäß einer vorteilhaften Ausgestaltung der Erfindung ist die übergeordnete Einheit zum Erkennen eines Ausfalls von Kommunikationsstrecken zu den Teilnehmern und zum Erkennen eines Ausfalls der Teilnehmer vorgesehen. Die Funktionalität der Kommunikation wird also durch die übergeordnete Kommunikationseinheit (oder Partnereinheit) überwacht.

Falls die übergeordnete Einheit den Ausfall des Vorzugskanals aufdeckt, kann sie die momentan als Reserve eingestellte Teileinheit der redundanten Kommunikationseinheit zu einer Umschaltung bzw. Übernahme der geschalteten Adresse veranlassen. Vorteilhafterweise ist somit die übergeordnete Einheit zur Auswahl einer bevorzugten Kommunikationsstrecke aus den Kommunikationsstrecken zu den einer Gruppe zugeordneten Teilnehmern vorgesehen. Eine Gruppe zueinander redundanter Teilnehmer wird im Folgenden auch als Redundanzgruppe bezeichnet. Jede einzelne der redundanten Teileinheiten weist zwei Adressen auf. Eine erste Adresse ist jeweils der Teileinheit fest zugeordnet. Die andere Teiladresse ist die zweite, die so genannte umschaltbare Adresse. Die umschaltbare Adresse wird beim Vorzugskanal aktiviert und bei allen zu dieser Redundanzgruppe gehörenden redundanten Kanälen deaktiviert. Bei Ausfall des Vorzugskanals wird auf dem Reservekanal die umschaltbare Adresse aktiv geschaltet. Über die umschaltbare Adresse ist die gemeinsame Funktionalität der Gruppe erreichbar.

Gemäß einer weiteren vorteilhaften Ausgestaltung der Erfindung ist das System zur Adressierung von mindestens zwei zueinander redundanten Teilnehmern in einem Kommunikationsnetzwerk Teil eines industriellen Automatisierungssystems. Für alle Funktionen in denen die Aufteilung auf die redundanten Kanäle bzw. redundanten Kommunikationseinheiten keine Relevanz hat, verhält sich die Komponente wie eine einkanalige Komponente. Zu diesen Funktionen gehören z. B. Prozessdaten lesen/schreiben und Prozessalarme. Für diese Funktionen verhält sich die redundante Netzkomponente sowohl am Kommunikationsring als auch am redundanten Kommunikationsbus wie eine einzige Komponente. Dies hat den Vorteil dass die Redundanz verdeckt bleibt. In der Automatisierungstechnik ist das Ziel, dass eine Partnerkomponente, die nur Prozessdaten oder Prozessalarme von der redundanten Peripherieeinheit verarbeitet, sich nicht um die Redundanz kümmern muss. Wenn die Vorzugskanalteileinheit ausfällt, wiederholt das unterlagerte Kommunikationssystem, z. B. Ethernet, automatisch den Kommunikationswunsch und da die umschaltbare Adresse auf der anderen Seite antwortet, läuft die Kommunikation nun über den ehemaligen Standby-Kanal, ohne dass die einkanalige Kommunikationseinheit selbst aktiv werden muss. Nur diejenigen Funktionseinheiten, welche die einzelnen Teileinheiten adressieren müssen (z. B. für Diagnose und Wartung), müssen das Wissen über die Redundanz haben, indem sie die Adressen der Teileinheiten kennen. Dies hat den Vorteil, dass für Reparatur und Wartung alle notwendigen Informationen (wie ortrichtige Daten der Teileinheiten) mit den gleichen Mitteln gelesen und geschrieben werden können wie bei einkanaligen Komponenten. Dies hat somit aus ihrer Sicht ebenfalls den Vorteil, dass die Redundanz verdeckt bleibt.

Um eine einfache automatische Adressierung - insbesondere beim Hochlauf des Systems - zu erreichen, aktiviert gemäß einer weiteren vorteilhaften Ausgestaltung der Erfindung einer der redundanten Teilnehmer einer Gruppe eine ihm zugeordnete dritte im Kommunikationsnetzwerk eindeutige physikalische Adresse als im Kommunikationsnetzwerk gültige der jeweiligen Gruppe zugeordnete zweite Adresse und deaktivieren die übrigen redundanten Teilnehmer der Gruppe die zweite Adresse.

Nachfolgend wird die Erfindung anhand der in den Figuren dargestellten Ausführungsbeispiele näher beschrieben und erläutert.

Es zeigen:
- FIG 1: ein System zur Adressierung von zwei zueinander redundanten Teilnehmern in einem Kommunikationsnetzwerk,
- FIG 2: ein System mit zueinander redundanten Teilnehmern in einem Kommunikationsnetzwerk mit einem redundant ausgeführten Kommunikationsbus,
- FIG 3: eine Kommunikationseinheit mit zwei redundanten Teileinheiten und
- FIG 4: ein System zur Adressierung von zueinander redundanten Teilnehmern in einem Kommunikationsnetzwerk zur Verdeutlichung der Kommunikationsbeziehungen innerhalb des Systems.

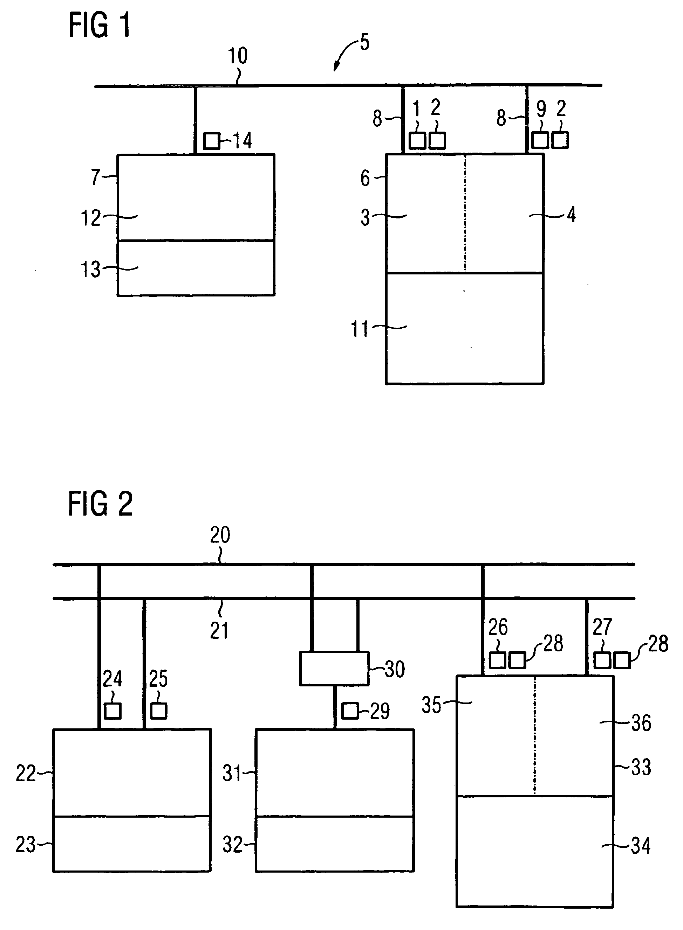

Figur 1 zeigt ein System zur Adressierung von zwei zueinander redundanten Teilnehmern 3, 4 in einem Kommunikationsnetzwerk 5. Die Teilnehmer 3, 4 sind im Ausführungsbeispiel gemäß Figur 1 zueinander redundante Kommunikationseinheiten einer Funktionseinheit 11. Die zueinander redundanten Teilnehmer 3, 4 bilden eine Gruppe 6. Die redundanten Teilnehmer 3, 4 können über einen Kommunikationsbus 10 im Kommunikationsnetzwerk 5 kommunizieren. An den Kommunikationsbus 10 ist eine übergeordnete Einheit 7 angeschlossen, welche eine Kommunikationseinheit 12 sowie eine Funktionseinheit 13 aufweist. Zur Kommunikation stehen verschiedene Kommunikationsstrecken 8 zur Verfügung. Dem ersten redundanten Teilnehmer 3 ist eine im Kommunikationsnetzwerk 5 eindeutige physikalische Adresse 1 dauerhaft zugeordnet. Dem zweiten redundanten Teilnehmer 4 ist eine andere im Kommunikationsnetzwerk 5 eindeutige physikalische Adresse 9 dauerhaft zugeordnet. Der Gruppe 6 der zueinander redundanten Teilnehmer 3, 4 ist eine weitere im Kommunikationsnetzwerk 5 eindeutige physikalische Adresse 2 zugeordnet, welche bei jedem der beiden redundanten Teilnehmer 3, 4 der Gruppe 6 als im Kommunikationsnetzwerk 5 gültige Adresse aktivierbar und deaktivierbar ist. Diese Aktivierung und Deaktivierung erfolgt im Ausführungsbeispiel gemäß Figur 1 auf Initiative der übergeordneten Einheit 7. Dabei weist die übergeordnete Einheit 7 genau einem der beiden redundanten Teilnehmer 3, 4 die weitere Adresse 2 zu, d. h. aktiviert diese Adresse 2 bei dem jeweiligen Teilnehmer 3, 4. Bei dem jeweils anderen Teilnehmer 3, 4 wird hingegen diese Adresse 2 durch die übergeordnete Funktionseinheit 7 deaktiviert. Eine solchermaßen vorgenommene Zuordnung von physikalischen Adressen 1, 2, 9 führt dazu, dass die zueinander redundanten Teilnehmer 3, 4 sowohl über ihre jeweilige erste Adresse 1, 9 einzeln eindeutig adressierbar bzw. ansprechbar sind, als auch als Gruppe 6 über die physikalische Adresse 2 adressierbar sind. Die physikalische Adresse 2 wird dabei einem der beiden durch die redundanten Teilnehmer 3, 4 und die jeweiligen Bussegmente gebildeten Kommunikationskanäle als Vorzugskanal zugeordnet. Der jeweilige andere Kommunikationskanal wird als Reservekanal bereitgehalten. Die Funktionalität der Kommunikation wird durch die übergeordnete Einheit 7 überwacht. Falls die übergeordnete Einheit 7 den Ausfall oder eine Störung der Kommunikation mit dem Vorzugskanal aufdeckt, veranlasst sie den momentan als Reserve eingestellten Teilnehmer 3 bzw. 4 der Gruppe zu einer Umschaltung bzw. Übernahme der so genannten geschalteten Adresse 2.

Bei bisher bekannten System ist bei den zueinander redundanten Einheiten entweder nur eine einzige identische Adresse für beide Einheiten oder nur eine Adresse für den Vorzugskanal und eine Adresse für den Standby-Kanal vorgesehen. Bei Ausfall des Vorzugskanals übernimmt dann die Teil-Kommunikationseinheit die bisher Standby-Kanal war, so schnell wie möglich den Vorzugskanal und die Adresse des Vorzugskanals. Aus Anwendersicht wechselt dabei aber die gesamte Kommunikationseinheit die Adresse. Bei beiden bisher bekannten Verfahren ist es jedoch nicht möglich die Anforderung vernünftig zu lösen, dass jede der redundanten Einheiten im Netzwerk eindeutig adressierbar sein soll. Diagnose- und Wartungswerkzeuge wissen bei den gemäß Stand der Technik bekannten Verfahren somit nicht, mit welcher der beiden zueinander redundanten Kommunikationseinheiten sie kommunizieren.

Figur 2 zeigt ein weiteres Ausführungsbeispiel eines Systems zur Adressierung von zwei zueinander redundanten Teilnehmern in einem Kommunikationsnetzwerk mit einem redundanten Bussystem. Kommunikationseinheiten 22, 31, 33 sind über redundante Kommunikationsstrecken 20, 21, z. B. Kommunikationsbusse, miteinander gekoppelt. Die Kommunikationseinheiten 22, 31, 33 erfüllen Kommunikationsaufgaben für Funktionseinheiten 23, 32, 34. Bei der Kommunikationseinheit 33 für die Funktionseinheit 34 handelt es sich um eine redundante Kommunikationseinheit, welche zwei zueinander redundante Teileinheiten 35 bzw. 36 enthält. Ebenso ist die Kommunikationseinheit 22 der übergeordneten Funktionseinheit 23 als redundante übergeordnete Kommunikationseinheit ausgebildet. Ein weiterer Teilnehmer der Kommunikation ist die einkanalige Funktionseinheit 32, welche über die einkanalige Kommunikationseinheit 31 kommuniziert.

Den Kommunikationseinheiten 22, 31 und den Teileinheiten 35, 36 ist jeweils eine feste physikalische im Kommunikationsnetzwerk eindeutige Adresse zugeordnet. Im Ausführungsbeispiel gemäß Figur 2 ist diese physikalische Adresse als so genannte MAC-Adresse 24, 25, 26 bzw. 27 ausgeführt (MAC = Media Access Control). Als MAC-Adresse wird eine üblicherweise durch 48 Bit große Hexadezimalzahlen dargestellte und in der Regel unveränderbare Identifizierungsnummer eines Teilnehmers in einem Kommunikationsnetzwerk bezeichnet. Die MAC-Adresse ist eine Hardware-Adresse, die zur eindeutigen Identifikation eines Knotens im Netzwerk dient. Gemäß dem OSI-Referenzmodell (OSI = Open System Interconnection), welches auch als 7-Schichtenmodell bezeichnet wird, wird die zweite Schicht, die so genannte Datensicherungsschicht, in zwei Unterschichten geteilt, wobei die MAC-Schicht die untere Schicht ist. Die MAC-Schicht dient zum Organisieren der Bit-Übertragungsschicht in logische Gruppen von Informationen, die so genannten Rahmen, sowie zur Fehlerfeststellung, zum Steuern des Datenflusses und zum Identifizieren der Rechner im Netzwerk. Es wird nun für die redundanten Teileinheiten 35, 36 eine zusätzliche Adresse 28 eingeführt. Das heißt, jede der Teileinheiten 35, 36 erhält zwei Adressen. Die jeweilige erste Adresse 26, 27 ist fest der jeweiligen Teileinheit 35 bzw. 36 zugeordnet, während die andere Adresse 28 die so genannte umschaltbare Adresse ist. Die umschaltbare Adresse 28 wird beim Vorzugskanal aktiviert und beim Reservekanal deaktiviert. Bei Ausfall des Vorzugskanals oder der Kommunikationsstrecke 20 bzw. 21 wird auf dem Reservekanal die zweite Adresse 28 aktiv geschaltet. Über die zweite Adresse 28 ist die gemeinsame Funktionalität der Funktionseinheit 34 erreichbar.

Eine mögliche Realisierung auf MAC-Adressebene sieht folgendermaßen aus: Jede der beiden Teileinheiten 35, 36 beinhaltet zwei weltweit eindeutige MAC-Adressen 26, 27 bzw. 28. Diejenige Teileinheit 35, 36, die nach dem ersten Einschalten des Systems zuerst betriebsbereit ist, aktiviert selbstständig beide ihrer Adressen 26, 27 bzw. 28 - eine Adresse als fest zugeordnete Adresse 26 bzw. 27 und die andere Adresse als die so genannte geschaltete Adresse 28. Diejenige Teileinheit 35, 36, die nachfolgend anläuft, aktiviert nur ihre als fest zugeordnete Adresse 26 bzw. 27. Die so genannte geschaltete Adresse 28 lässt diese Teileinheit 35, 36 inaktiv. Die Teileinheit 35, 36 bereitet sich jedoch darauf vor, die geschaltete MAC-Adresse 28 der anderen Teileinheit 35, 36 zu übernehmen, falls diese andere Teileinheit 35, 36 ausfällt.

Die übergeordnete Kommunikationseinheit 22 ist im Ausführungsbeispiel gemäß Figur 2 redundant realisiert, d. h., dass sie über die Kommunikationsstrecke 20 mittels der Adresse 24 bzw. über die Kommunikationsstrecke 21 mittels der Adresse 25 ansprechbar ist. Die übergeordnete Kommunikationseinheit 22 hat die Aufgabe, die Kommunikation zur redundanten Kommunikationseinheit 33 zu überwachen. Diese Überwachung geht sowohl zum Vorzugskanal (Primary) als auch zum Reservekanal. Bei Ausfall des Reservekanals (entweder durch Ausfall des Busanschlusses oder Ausfall der jeweiligen Reserveteileinheit 35 oder 36) wird dieser Ausfall an ein übergeordnetes Leitsystem gemeldet. Bei Ausfall des Vorzugskanals wird durch die übergeordnete Funktionseinheit 23 an die jeweilige Reserveeinheit 35 bzw. 36 eine Meldung geschickt, selbst Vorzugskanal zu werden. Diese Teileinheit 35, 36 behält ihre feste Adresse 26 bzw. 27 bei und aktiviert die geschaltete Adresse 28 für den Vorzugskanal. Der ehemalige Vorzugskanal wird sowohl über die interne Verbindung als auch von der übergeordneten Kommunikationseinheit 22 beauftragt, seine Vorzugskanaladresse 28 zu deaktivieren (sofern er nicht schon ausgefallen ist und damit kommunikationstechnisch nicht mehr aktiv ist).

Die Vergabe der umschaltbaren Adresse erfolgt beispielsweise mit einem der beiden im Folgenden beschriebenen Verfahren: Bei dem ersten vorgeschlagenen Verfahren verwaltet die übergeordnete Kommunikationseinheit 22 die umschaltbaren Adressen und vergibt sie bei jeder erstmaligen Aktivierung einer redundanten Gruppe. Vom Werk aus ist auf jeder der Teileinheiten 35, 36 eine Adresse 26, 27 eingestellt, die andere Adresse 28 ist 0 bzw. nicht aktiv. Erst bei der Inbetriebnahme der Teileinheit 35, 36 in einer redundanten Gruppe wird die zweite Adresse 28 genutzt. Beim zweiten vorgeschlagenen Verfahren hat jede Teileinheit 35, 36 der zur Redundanzgruppe gehörigen Kommunikationseinheit 33 vom Werk zwei weltweit eindeutige Adressen eingestellt. Beispielsweise Teileinheit 35 erhält die Adressen "a + x" und die Teileinheit 36 die Adressen "b + y". Beim Einschalten der zueinander redundanten Teileinheiten 35, 36 aktiviert die zuerst eingeschaltete Teileinheit 35 ihre umschaltbare Adresse "x". Die nachfolgend eingeschaltete Teileinheit 36 verwirft ihre umschaltbare Adresse "y" und übernimmt die Adresse "x" als umschaltbare Adresse.

Diagnose- und Wartungswerkzeuge sind meist wie die einkanalige Funktionseinheit 32 mit einer einkanaligen Kommunikationseinheit 31 realisiert. Der einkanaligen Kommunikationseinheit 31 ist wiederum eine feste physikalische Adresse 29 zugeordnet. Die Kommunikationseinheit 31 kommuniziert über einen Switch 30 mit den redundanten Kommunikationsstrecken 20 bzw. 21. Diagnose- und Wartungswerkzeuge kennen beide Adressen 26, 27 der redundanten Kommunikationseinheit 33, da es Ziel der Diagnose und der Wartung ist, einzelne austauschbare Teileinheiten 35, 36 zu diagnostizieren. Bei einem Kommunikationswunsch ist ein separates Ansprechen der jeweiligen Hardware-Einheit erforderlich, was mit den vorgeschlagenen Adressierungsmechanismen möglich ist.

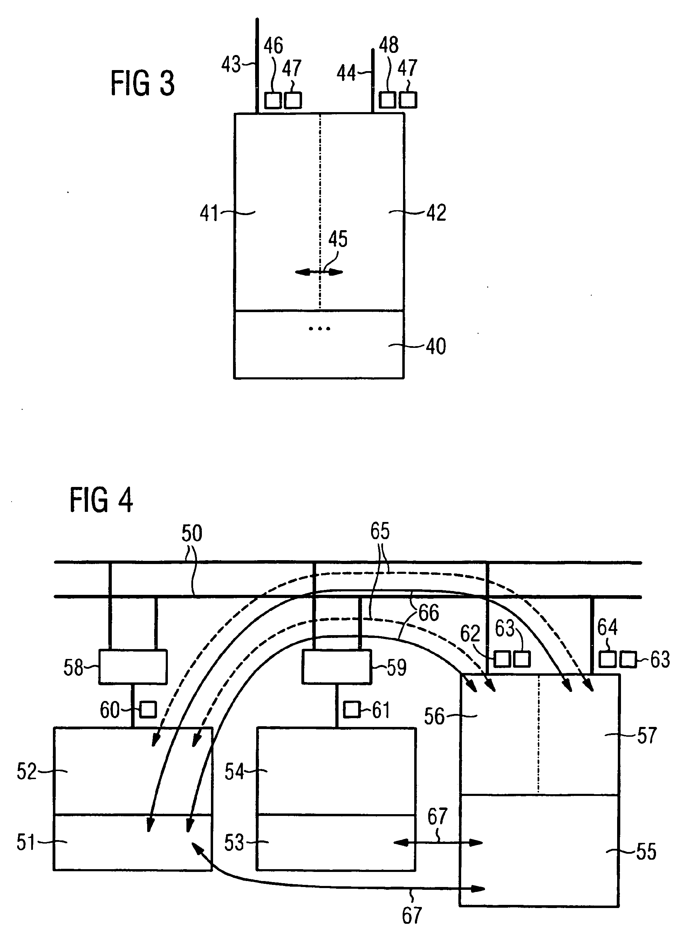

Figur 3 zeigt ein Ausführungsbeispiel einer Funktionseinheit 40 mit einer redundanten Kommunikationseinheit, die aus zwei Teileinheiten 41 bzw. 42 besteht. Die Teileinheiten 41 und 42 kommunizieren über Kommunikationsverbindungen 43 bzw. 44 mit weiteren hier nicht dargestellten Teilnehmern in einem Kommunikationsnetzwerk. Die Teileinheiten 41, 42 sind über physikalische Adressen 46, 47, 48 adressierbar. Zusätzlich besteht eine interne Kommunikationsverbindung 45 zwischen den beiden Teileinheiten 41 und 42. Da die beschriebene Adressumschaltung nicht über die interne Kommunikationsverbindung 45 erfolgt, sondern über die externen Kommunikationsverbindungen 43, 44, kann einerseits der Ausfall der internen Kommunikationsverbindung 45 beherrscht werden und andererseits zusätzlich der Ausfall der externen Kommunikationsverbindungen 43, 44 erkannt und beherrscht werden.

Figur 4 dient zur Verdeutlichung der Kommunikationsbeziehungen innerhalb eines Systems zur Adressierung von zueinander redundanten Teilnehmern in einem Kommunikationsnetzwerk. Dargestellt ist eine Funktionseinheit 55 mit einer aus zwei Teileinheiten 56, 57 bestehenden Kommunikationseinheit, eine einkanalige Kommunikationseinheit 53 mit einer einkanaligen Kommunikationseinheit 54 sowie eine übergeordnete Funktionseinheit 51 mit einer übergeordneten Kommunikationseinheit 52. Die übergeordnete Kommunikationseinheit 52 ist über die Adresse 60 adressierbar und kommuniziert über einen Switch 58 mit dem redundanten Kommunikationsbus 50. Die einkanalige Kommunikationseinheit 54 ist über die Adresse 61 adressierbar und kommuniziert über den Switch 59 mit dem redundanten Kommunikationsbus 50. Die Teileinheiten 56, 57 der redundanten Kommunikationseinheit kommunizieren ebenfalls über den redundanten Kommunikationsbus 50 und sind über Adressen 62, 63 bzw. 64 adressierbar.

Die mit dem Bezugszeichen 67 gekennzeichneten Pfeile stellen die Mehrzahl der Kommunikationsbeziehungen innerhalb des dargestellten Systems dar. Über diese Kommunikationsbeziehungen werden z. B. Prozessdaten und Prozessalarme ausgetauscht. Diese Kommunikationsbeziehungen arbeiten bezüglich der redundanten Kommunikationseinheit mit der geschalteten Adresse 63 und sind insofern identisch zu einer Kommunikationsbeziehung zu einem einkanaligen Gerät. Die mit dem Bezugszeichen 66 gekennzeichneten Pfeile stellen die Kommunikationsbeziehungen für Wartung und Diagnose zu den Teileinheiten 56, 57 der Kommunikationseinheit dar. Zusätzlich gibt es hier auch nicht dargestellte Kommunikationsbeziehungen zur Funktionseinheit 55. Die mit dem Bezugszeichen 65 bezeichneten Kommunikationsbeziehungen stellen die Funktionen dar, welche für die Kommunikationsüberwachung und für die Umschaltanforderung bei Erkennung eines Fehlers auf dem Vorzugskanal erforderlich sind. Über diese Kommunikationsbeziehungen wird auch die Kommunikationsstörung auf dem Reservekanal erkannt und gemeldet. Im dargestellten Fall ist die Teileinheit 57 die Reserveeinheit und hat somit ihre schaltbare Adresse 63 nicht aktiviert.

Zusammengefasst betrifft die Erfindung somit ein System sowie ein Verfahren zur Adressierung von mindestens zwei zueinander redundanten Teilnehmern 3, 4 in einem Kommunikationsnetzwerk 5, wobei den Teilnehmern 3, 4 jeweils eine erste im Kommunikationsnetzwerk 5 eindeutige physikalische Adresse 1, 9 dauerhaft zugeordnet ist. Um die Verfügbarkeit von Kommunikationsverbindungen innerhalb des Kommunikationsnetzwerks zu erhöhen, wird vorgeschlagen, dass einer Gruppe 6 von zueinander redundanten Teilnehmern 3, 4 jeweils eine zweite im Kommunikationsnetzwerk 5 eindeutige physikalische Adresse 2 zugeordnet ist, wobei die einer Gruppe 6 zugeordnete zweite Adresse 2 bei den redundanten Teilnehmern 3, 4 der Gruppe 6 jeweils als im Kommunikationsnetzwerk 5 gültige Adresse aktivierbar und deaktivierbar ist, wobei mindestens eine übergeordnete Einheit 7 jeweils zu einem Zeitpunkt zur Aktivierung der zweiten Adresse 2 bei genau einem der redundanten Teilnehmer 3, 4 der Gruppe 6 und zur Deaktivierung der zweiten Adresse 2 bei den übrigen redundanten Teilnehmern 3, 4 der Gruppe 6 vorgesehen ist.

## Patentansprüche

1. System umfassend ein Kommunikationsnetzwerk (5) eine übergeordnete Einheit (7) und eine Fonktionseinheit (11), das System eingerichtet zur Adressierung von mindestens zwei zueinander redundanten Kommunikationseinheiten (3, 4) der Funktionseinheit (11) in dem Kommunikationsnetzwerk (5) eines industriellen Automatisierungssystems, wobei den Kommunikationseinheiten (3, 4) jeweils eine erste im Kommunikationsnetzwerk (5) eindeutige physikalische Adresse (1, 9) dauerhaft zugeordnet ist und der Gruppe (6) der zwei zueinander redundanten Kommunikationseinheiten (3, 4) eine zweite im Kommunikationsnetzwerk (5) eindeutige physikalische Adresse (2) zugeordnet ist, wobei die der Gruppe (6) zugeordnete zweite Adresse (2) bei den redundanten Kommunikationseinheiten (3, 4) der Gruppe (6) jeweils als im Kommunikationsnetzwerk (5) gültige Adresse aktivierbar und deaktivierbar ist, wobei mindestens eine übergeordnete Einheit (7) jeweils zu einem Zeitpunkt zur Aktivierung der zweiten Adresse (2) bei genau einer der redundanten Kommunikationseinheiten (3, 4) der Gruppe (6) und zur Deaktivierung der zweiten Adresse (2) bei den übrigen redundanten Kommunikationseinheiten (3, 4) der Gruppe (6) vorgesehen ist, wobei die Funktionseinheit (11) für Funktionen mit verdeckter Redundanz nur eine Adresse (2) aufweist und für Funktionen mit offener Redundanz so viele Adressen (1,9) aufweist, wie redundante Komponenten (3,4) in der redundanten Funktionseinheit (11) vorhanden sind.

2. System nach Anspruch 1, **dadurch gekennzeichnet, dass** die übergeordnete Einheit (7) zum Erkennen eines Ausfalls von Kommunikationsstrecken (8) zu den Kommunikationseinheiten (3, 4) der Funktionseinheit und eines Ausfalls der Kommunikationseinheiten (3, 4) vorgesehen ist.

3. System nach Anspruch 1 oder 2, **dadurch gekennzeichnet, dass** die übergeordnete Einheit (7) zur Auswahl einer bevorzugten Kommunikationsstrecke (8) aus den Kommunikationsstrecken (8) zu den einer Gruppe (6) zugeordneten Kommunikationseinheiten (3, 4) vorgesehen ist.

4. Verfahren zur Adressierung von mindestens zwei zueinander redundanten Kommunikationseinheiten (3, 4) einer Funktionseinheit (11) in einem Kommunikationsnetzwerk (5) eines industriellen Automatisierungssystems, wobei den Kommunikationseinheiten (3, 4) jeweils eine erste im Kommunikationsnetzwerk (5) eindeutige physikalische Adresse (1, 9) dauerhaft zugeordnet wird und der Gruppe (6) der zwei zueinander redundanten Kommunikationseinheiten (3, 4) eine zweite im Kommunikationsnetzwerk (5) eindeutige physikalische Adresse (2) zugeordnet wird, wobei die der Gruppe (6) zugeordnete zweite Adresse (2) bei den redundanten Kommunikationseinheiten (3, 4) der Gruppe (6) jeweils als im Kommunikationsnetzwerk (5) gültige Adresse aktiviert und deaktiviert werden kann, wobei mindestens eine übergeordnete Einheit (7) die zweite Adresse (2) bei genau einem der redundanten Kommunikationseinheiten (3, 4) der Gruppe (6) aktiviert und die zweite Adresse (2) bei den übrigen redundanten Kommunikationseinheiten (3, 4) der Gruppe (6) jeweils deaktiviert, wobei die Funktionseinheit (11) für Funktionen mit verdeckter Redundanz nur eine Adresse (2) erhält und für Funktionen mit offener Redundanz so viele Adressen (1,9) erhält, wie redundante Komponenten (3,4) in der redundanten Funktionseinheit (11) vorhanden sind.

5. Verfahren nach Anspruch 4, **dadurch gekennzeichnet, dass** die übergeordnete Einheit (7) einen Ausfall von Kommunikationsstrecken (8) zu den Kommunikationseinheiten (3, 4) und einen Ausfall der Kommunikationseinheiten (3, 4) erkennt.

6. Verfahren nach Anspruch 4 oder 5, **dadurch gekennzeichnet, dass** die übergeordnete Einheit (7) eine bevorzugte Kommunikationsstrecke (8) aus den Kommunikationsstrecken (8) zu den einer Gruppe (6) zugeordneten Kommunikationseinheiten (3, 4) auswählt.

7. Verfahren nach einem der Ansprüche 4 bis 6, **dadurch gekennzeichnet, dass** einer der redundanten Kommunikationseinheiten einer Gruppe eine ihm zugeordnete dritte im Kommunikationsnetzwerk (5) eindeutige physikalische Adresse als im Kommunikationsnetzwerk (5) gültige der Gruppe zugeordnete zweite Adresse (2) aktiviert und dass die übrigen redundanten Kommunikationseinheiten (3, 4) der Gruppe (6) die zweite Adresse (2) deaktivieren.

## Claims

1. System comprising a communication network (5), a higher-order unit (7) and a function unit (11), which sets the system up to address at least two communication units (3, 4) of the function unit (1)) that are redundant in respect of each other in the communication network (5) of an industrial automation system, whereby the communication units (3, 4) are each permanently assigned a first physical address (1, 9) that is unique in the communication network (5) and the group (6) of communication units (3, 4) that are redundant in respect of each other are each assigned a second physical address (2) that is unique in the communication network (5), whereby the second address (2) assigned to the group (6) can be activated and deactivated as the valid address in the communication network (5) for the redundant communication units (3, 4) in the group (6) respectively, whereby at least one higher-order unit (7) is provided respectively at one time to activate the second address (2) for just one of the redundant communication units (3, 4) in the group (6) and to deactivate the second address (2) for the remaining redundant communication units (3, 4) in the group (6), whereby the function unit (11) only has one address for functions with hidden redundancy and as many addresses for functions with open redundancy as redundant components (3, 4) in the redundant function unit (11).

2. System according to claim 1, **characterized in that** the higher-order unit (7) is provided to identify failure of communication links (8) to the communication units (3, 4) of the function unit and failure of the communication units (3, 4).

3. System according to claim 1 or 2, **characterized in that** the higher-order unit (7) is provided to select a preferred communication link (8) from the communication links (8) to the communication units (3, 4) assigned to a group (6).

4. Method for addressing at least two communication units (3, 4) of a function unit (11) that are redundant in respect of each other in a communication network (5) of an industrial automation system, whereby the communication units (3, 4) are each permanently assigned a first physical address (1, 9) that is unique in the communication network (5) and the group (6) of two communication units (3, 4) that are redundant in respect of each other are each assigned a second physical address (2) that is unique in the communication network (5), whereby the second address (2) assigned to the group (6) can be activated and deactivated as the valid address in the communication network (5) for the redundant communication units (3, 4) in the group (6) respectively, whereby at least one higher-order unit (7) activates the second address (2) for just one of the redundant communication units (3, 4) in the group (6) and deactivates the second address (2) for the remaining redundant communication units (3, 4) in the group (6), whereby the function unit (11) only contains one address (2) for the functions with hidden redundancy and for functions with open redundancy contains as many addresses as there are redundant components (3, 4) in the redundant function unit (11).

5. Method according to claim 4, **characterized in that** the higher-order unit (7) identifies failure of communication links (8) to the communication units (3, 4) and failure of the communication units (3, 4).

6. Method according to claim 4 or 5, **characterized in that** the higher-order unit (7) selects a preferred communication link (8) from the communication links (8) to the communication units (3, 4) assigned to the group (6).

7. Method according to one of claims 4 to 6, **characterized in that** one of the redundant communication units in a group activates a third address assigned to it that is unique in the communication network (5) as the second valid address (2) in the communication network (5) assigned to the respective group and that the remaining redundant communication units (3, 4) in the group (6) deactivate the second address (2).

## Revendications

1. Système comprenant un réseau de communication (5), une unité supérieure (7) et une unité fonctionnelle (11), et conçu pour l'adressage d'au moins deux unités de communication (3, 4), redondantes l'une par rapport à l'autre, de l'unité fonctionnelle (11) dans le réseau de communication (5) d'un système d'automatisation industriel, une première adresse physique (1, 9) univoque dans le réseau de communication (5) étant associée durablement à chacune des unités de communication (3, 4) et une deuxième adresse physique (2) univoque dans le réseau de communication (5) étant associée au groupe (6) des deux unités de communication (3, 4) redondantes l'une par rapport à l'autre, la deuxième adresse (2) associée au groupe (6) étant activable et désactivable pour les unités de communication redondantes (3, 4) du groupe (6) à chaque fois comme adresse valide dans le réseau de communication (5), au moins une unité supérieure (7) étant prévue à chaque fois à un instant donné pour l'activation de la deuxième adresse (2) pour exactement l'une des unités de communication redondantes (3, 4) du groupe (6) et pour la désactivation de la deuxième adresse (2) pour les autres unités de communication redondantes (3, 4) du groupe (6), l'unité fonctionnelle (11) comportant pour des fonctions à redondance cachée une seule adresse (2) et pour des fonctions à redondance ouverte autant d'adresses (1, 9) qu'il existe de composants redondants (3, 4) dans l'unité fonctionnelle redondante (11).

2. Système selon la revendication 1, **caractérisé par le fait que** l'unité supérieure (7) est prévue pour la détection d'une panne de voies de communication (8) vers les unités de communication (3, 4) de l'unité fonctionnelle et d'une panne des unités de communication (3, 4).

3. Système selon la revendication 1 ou 2, **caractérisé par le fait que** l'unité supérieure (7) est prévue pour la sélection d'une voie de communication préférée (8) parmi les voies de communication (8) vers les unités de communication (3, 4) associées à un groupe (6).

4. Procédé pour l'adressage d'au moins deux unités de communication (3, 4), redondantes l'une par rapport à l'autre, d'une unité fonctionnelle (11) dans un réseau de communication (5) d'un système d'automatisation industriel, une première adresse physique (1, 9) univoque dans le réseau de communication (5) étant associée durablement à chacune des unités de communication (3, 4) et une deuxième adresse physique (2) univoque dans le réseau de communication (5) étant associée au groupe (6) des deux unités de communication (3, 4) redondantes l'une par rapport à l'autre, la deuxième adresse (2) associée au groupe (6) pouvant être activée et désactivée pour les unités de communication redondantes (3, 4) du groupe (6) à chaque fois comme adresse valide dans le réseau de communication (5), au moins une unité supérieure (7) activant la deuxième adresse (2) pour exactement l'une des unités de communication redondantes (3, 4) du groupe (6) et désactivant à chaque fois la deuxième adresse (2) pour les autres unités de communication redondantes (3, 4) du groupe (6), l'unité fonctionnelle (11) recevant pour des fonctions à redondance cachée une seule adresse (2) et pour des fonctions à redondance ouverte autant d'adresses (1, 9) qu'il existe de composants redondants (3, 4) dans l'unité fonctionnelle redondante (11).

5. Procédé selon la revendication 4, **caractérisé par le fait que** l'unité supérieure (7) détecte une panne de voies de communication (8) vers les unités de communication (3, 4) et une panne des unités de communication (3, 4).

6. Procédé selon la revendication 4 ou 5, **caractérisé par le fait que** l'unité supérieure (7) sélectionne une voie de communication préférée (8) parmi les voies de communication (8) vers les unités de communication (3, 4) associées à un groupe (6).

7. Procédé selon l'une des revendications 4 à 6, **caractérisé par le fait que** l'une des unités de communication redondantes d'un groupe active une troisième adresse physique qui lui est associée et qui est univoque dans le réseau de communication (5) comme deuxième adresse (2) associée au groupe et valide dans le réseau de communication (5) et que les autres unités de communication redondantes (3, 4) du groupe (6) désactivent la deuxième adresse (2).
